(19) **Europäisches Patentamt / European Patent Office / Office européen des brevets**

(11) **EP 3 816 515 B1**

(12) **EUROPEAN PATENT SPECIFICATION**

(45) Date of publication and mention
of the grant of the patent:
**20.08.2025 Bulletin 2025/34**

(21) Application number: **19814565.8**

(22) Date of filing: **31.05.2019**

(51) International Patent Classification (IPC):
**F23G 5/50** *(2006.01)*    **G05B 23/02** *(2006.01)*
**F23G 5/00** *(2006.01)*

(52) Cooperative Patent Classification (CPC):
**F23G 5/30; F23G 5/002; F23G 5/50; F23N 5/265;**
G05B 13/048

(86) International application number:
**PCT/JP2019/021712**

(87) International publication number:
**WO 2019/235377 (12.12.2019 Gazette 2019/50)**

(54) **METHOD FOR ESTIMATING STATE QUANTITY OF COMBUSTION FACILITY, COMBUSTION CONTROL METHOD, AND COMBUSTION CONTROL DEVICE**

VERFAHREN ZUR SCHÄTZUNG DER ZUSTANDSGRÖSSE EINER VERBRENNUNGSANLAGE, VERBRENNUNGSSTEUERUNGSVERFAHREN UND VERBRENNUNGSSTEUERUNGSVORRICHTUNG

PROCÉDÉ D'ESTIMATION DE QUANTITÉ D'ÉTAT D'UNE INSTALLATION DE COMBUSTION, PROCÉDÉ DE COMMANDE DE COMBUSTION ET DISPOSITIF DE COMMANDE DE COMBUSTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2018 JP 2018110306**

(43) Date of publication of application:
**05.05.2021 Bulletin 2021/18**

(73) Proprietor: **Ebara Environmental Plant Co., Ltd. Tokyo 144-0042 (JP)**

(72) Inventors:
• **MATSUOKA, Kei**
  **Tokyo 144-0042 (JP)**
• **UMEZAWA, Toshiyuki**
  **Tokyo 144-0042 (JP)**
• **YOKOYAMA, Akiko**
  **Tokyo 144-0042 (JP)**

(74) Representative: **Emde, Eric**
  **Wagner & Geyer Partnerschaft mbB**
  **Patent- und Rechtsanwälte**
  **Gewürzmühlstrasse 5**
  **80538 München (DE)**

(56) References cited:
  **WO-A1-2017/085941      WO-A2-2005/103565**
  **JP-A- 2006 064 300      JP-A- 2010 066 073**
  **JP-A- S59 195 012**

**Description**

TECHNICAL FIELD

The present invention relates to a method for estimating a state quantity of a combustion facility, a method for controlling combustion, and a device for controlling combustion.

BACKGROUND ART

Conventionally, in a combustion facility such as a refuse incineration plant, a biomass combustion plant, or the like, control of combustion in the combustion facility is performed by using various state quantities in the combustion facility. The various state quantities in the combustion facility are measured by using measuring instruments that are appropriate to be used in relation to the respective state quantities (for example, refer to patent Literature 1).
WO 2005/103565 A2 discloses a model of a waste combustion process which is suitable for controlling or simulating a waste incineration plant. A pile of waste is represented by two layers, and the heat transfer from a gas combustion phase or flame above the pile is limited to a heat radiation interaction between the flame and upper one of the layers. The resulting model-based controller for a waste incineration grate takes into account a variability of the waste composition via filtered white noise.
WO 2017/085941 A1 discloses information about a calorific value of waste that is being incinerated is accurately and continuously obtained in real time, and incineration control of the waste is carried out without any time delay with respect to a current incineration state by using the information. Incineration control of an incinerator is carried out on the basis of the following steps. (1) Estimating a calorific value of the waste from an actually measured component concentration in an incineration exhaust gas. (2) Estimating a boiler evaporation amount on the basis of the calculated waste calorific value. (3) Controlling supply amounts of the waste, incineration air, and a combustion improver introduced in the incinerator on the basis of the estimated boiler evaporation amount.

CITATION LIST

PATENT LITERATURE

PTL 1: Japanese Patent Application Public Disclosure No. 2018-021686

SUMMARY OF INVENTION

TECHNICAL PROBLEM

However, there are some state quantities of a combustion facility that are difficult to measure directly by using measuring instruments.
The present invention has been achieved in view of the above matter, and an object thereof is to estimate a state quantity that is difficult to measure directly, in a combustion facility in which an object-to-be-combusted is combusted.

SOLUTION TO PROBLEM

The invention is set out in the appended set of claims.
For solving the above problem, an embodiment of the present invention is a method for estimating, in a combustion facility in which an object-to-be-combusted is combusted, one or more state quantities that are difficult to measure directly, and the state quantity estimating method for the combustion facility is characterized in that: a state space model, in which the one or more state quantities are set to be objective variables, and one or more observed quantities that can be measured directly in one or more observation points positioned in the combustion facility and/or one or more calculated quantities that can be obtained by performing computation based on the one or more observed quantities are/is set to be explanatory variables, is used for estimating the objective variables.
According to the above embodiment, a state quantity, that is difficult to measure directly in a combustion facility, can be estimated by applying the state space model to the combustion facility.
According to the above embodiment of the invention, estimating of the objective variable using the state space model is performed by a processor of a computer by executing: a step for storing, in a memory of the computer, a state equation representing relationship between the state quantity at a (k-1)-th time step and the state quantity at a k-th time step; a step for storing, in the memory, an observation equation representing relationship between the state quantity at the k-th time step and the observed quantity and/or the calculated quantity at the k-th time step; a step for reading the state equation from the memory, and calculating an estimate value of the state quantity at the k-th time step by applying the state quantity at the (k-1)-th time step to the state equation; a step for reading the observation equation from the memory, and calculating prediction values (a prediction value) of the observed quantity and/or the calculated quantity at the k-th time step by applying the estimate value of the state quantity at the k-th time step to the observation equation; a step for obtaining an actual observation value of the observed quantity by using an measuring instrument in the observation point; a step for calculating a difference between the prediction value of the observed quantity and the observation value; and a step for correcting, based on the difference, the estimate value of the state quantity at the k-th time step.

According to the above embodiment, a state quantity, that is difficult to measure directly in a combustion facility, can be estimated precisely, by correcting an estimate value of the state quantity based on a difference between a prediction value of an observed quantity and an actually measured observation value.

Another embodiment of the present invention comprises the above embodiment and is characterized in that: the actually measured observation value of the observed quantity is a value measured at a (k+N)-th time step, and the difference is a difference between the prediction value at the (k+N)-th time step and the observation value.

Another embodiment of the present invention comprises the above embodiment and is characterized in that: above N represents a time lag according to correlation between temporal change in the state quantity and temporal change in the observed quantity in the combustion facility.

According to the above embodiment, a state quantity can be estimated precisely, even in the case that there is a time lag between behavior of a state quantity and behavior of a observed quantity in a combustion facility.

Another embodiment of the present invention comprises the above embodiment and is characterized in that: the state quantity includes at least one of a state quantity of the object-to-be-combusted, a state quantity of a catalyst, and a state quantity corresponding to a fluidizing state of a bed material.

Another embodiment of the present invention comprises the above embodiment and is characterized in that: the state quantity of the object-to-be-combusted includes at least one of a lower heating value, a higher heating value, a moisture content, a combustible content, an ash content, a carbon content, a hydrogen content, a nitrogen content, a sulfur content, a chlorine content, a mercury content, a waste type, and a waste-type composition ratio of the object-to-be-combusted.

According to the above embodiment, various kinds of state quantities, that are difficult to measure directly in a combustion facility, can be estimated.

Another embodiment of the present invention comprises the above embodiment and is characterized in that the observed quantity and the calculated quantity include at least one of: weight, volume, density, and a supplied quantity of the object-to-be-combusted; internal temperature, outlet temperature, internal pressure, a supplied air quantity, a supplied water quantity, a supplied chemical agent quantity, and a generated heat quantity of the combustion facility; a flow quantity, flow speed, density, and temperature of an exhaust gas discharged from the combustion facility; a carbon monoxide concentration, a carbon dioxide concentration, a nitrogen oxide concentration, a sulfur oxide concentration, a hydrogen chloride concentration, a moisture concentration, a mercury concentration, a dust concentration, an oxygen concentration, and a nitrogen concentration included in the exhaust gas; a steam flow quantity, steam pressure, steam temperature, a suppled water flow quantity, and a held water quantity of a boiler facility for cooling the exhaust gas; and a quantity of chemical agent supplied to the exhaust gas.

According to the above embodiment, a state quantity, that is difficult to measure directly in a combustion facility, can be estimated by using the above various kinds of observed quantities and/or calculated quantities.

Another embodiment of the present invention is a method for controlling combustion in a combustion facility, and is characterized in that: control of combustion in the combustion facility is performed based on a state quantity (state quantities) estimated in accordance with the state quantity estimating method for the combustion facility according to the above embodiment.

According to the above embodiment, control of combustion in a combustion facility can be performed based on an estimate of a state quantity that is difficult to measure directly in the combustion facility.

Another embodiment of the present invention is a combustion control device for controlling combustion in a combustion facility in which an object-to-be-combusted is combusted, and the combustion control device is characterized in that: the combustion control device is constructed to use a state space model, in which one or more state quantities, that are difficult to measure directly in the combustion facility, are set to be objective variables, and one or more observed quantities that can be measured directly in one or more observation points positioned in the combustion facility and/or one or more calculated quantities that can be obtained by performing computation based on the one or more observed quantities are set to be explanatory variables, to estimate the state quantities, and perform combustion control of the combustion facility based on the estimated state quantities; the combustion control device comprises a processor and a memory; the memory stores a state equation representing relationship between the state quantity at a (k-1)-th time step and the state quantity at a k-th time step, and an observation equation representing relationship between the state quantity at the k-th time step and the observed quantity and/or the calculated quantity at the k-th time step; and, for estimating the state quantity by use of the state space model, the processor is constructed to perform a step for reading the state equation from the memory, and calculating an estimate value of the state quantity at the k-th time step by applying the state quantity at the (k-1)-th time step to the state equation, a step for reading the observation equation from the memory, and calculating prediction values (a prediction value) of the observed quantity and/or the calculated quantity at the k-th time step by applying the estimate value of the state quantity at the k-th time step to the observation equation, a step for obtaining an actual observation value of the observed quantity by using a measuring instrument in the observation point, a step for calculating a difference between the prediction value of the observed quantity and the observation value, and a step for correcting, based on the difference, the estimate value of the state quantity at the k-th time step.

According to the above embodiment, control of combustion in a combustion facility can be performed based on an estimate of a state quantity that is difficult to measure directly in the combustion facility.

BRIEF DESCRIPTION OF DRAWINGS

Fig. 1 is a configuration diagram of a grate-fired incineration plant which is shown as an example of a combustion facility.
Fig. 2 is a flow chart of a state quantity estimating process for implementing a method for estimating a state quantity in a combustion facility.
Fig. 3 shows an example of temporal change of each of example state quantities, observed quantities, and calculated quantities in a grate-fired incineration plant.

DESCRIPTION OF EMBODIMENTS

In the following description, an embodiment of the present invention will be explained in detail with reference to the figures.

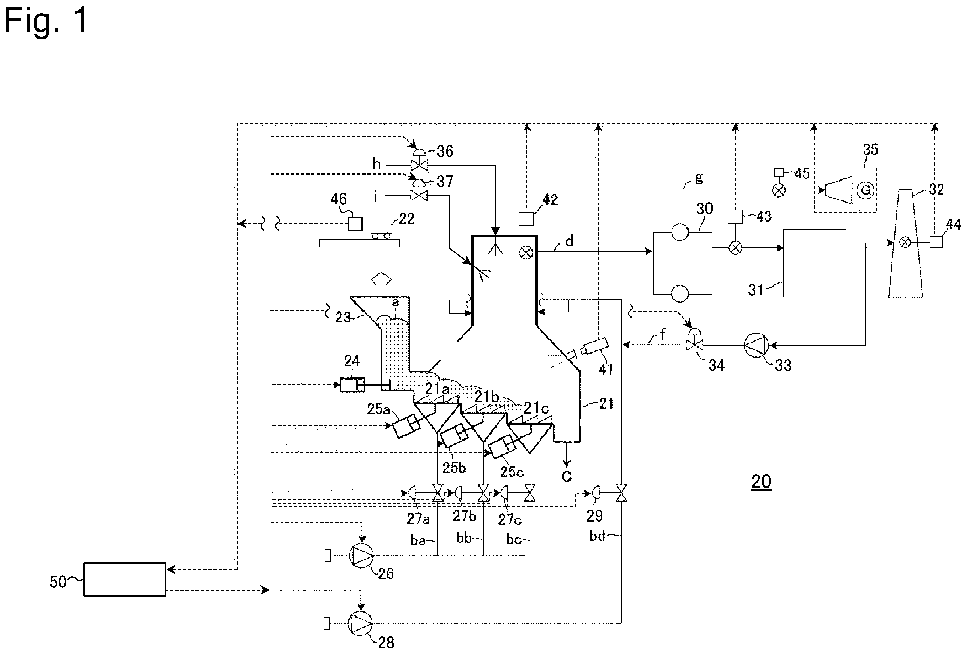

Fig. 1 is a configuration diagram of a grate-fired incineration plant 20 which is shown as an example of a combustion facility. In the following description, an embodiment wherein the present invention is applied to the grate-fired incineration plant 20 will be explained; however, an object to which the present invention can be applied is not limited to the grate-fired incineration plant 20. The technical idea of the present invention can be applied to a refuse incineration plant of a type other than the grate-fired type (for example, a fluidized-bed-type incinerator plant), a biomass combustion plant, or a combustion facility of any type for combusting other objects-to-be-combusted, for example.

An object-to-be-combusted (waste) a, which has been thrown into a waste hopper 23 by actuating a waste crane 22, is fed to the inside of a grate-fired incinerator 21 by actuating a waste supplying device 24. The waste supplying device 24 is driven by an oil hydraulic cylinder, and the speed to feed the object-to-be-combusted a can be adjusted by changing the oil quantity or the oil pressure relating to the oil hydraulic cylinder.

The object-to-be-combusted a fed to the inside of the grate-fired incinerator 21 is moved to a drying zone 21a, a combustion zone 21b, and a post-combustion zone 21c in order by actuating waste feeding devices 25a-25c; and, during the above process, the object-to-be-combusted is incinerated as a result that it reacts with primary combustion air ba-bc. Further, combustible gases generated in the drying zone 21a, the combustion zone 21b, and the post-combustion zone 21c are completely combusted as a result that they react with secondary combustion air bd in upper spaces thereof, i.e., in a secondary combustion chamber. Cinders are discharged as bottom ash c. In this regard, the waste feeding devices 25a-25c are driven by oil hydraulic cylinders, and the speed to feed the object-to-be-combusted a can be adjusted by changing the oil quantity or the oil pressure relating to the oil hydraulic cylinders.

The primary combustion air ba-bc is subjected to a boosting process in a primary combustion air blower 26 to raise its pressure to a predetermined pressure, and, thereafter, supplied from bottom parts of the drying zone 21a, the combustion zone 21b, and the post-combustion zone 21c to the inside of the grate-fired incinerator 21 via primary combustion air adjustment dampers 27a-27c. Further, the secondary combustion air bd is subjected to a boosting process in a secondary combustion air blower 28 to raise its pressure to a predetermined pressure, and, thereafter, supplied to the inside of the grate-fired incinerator 21 via a secondary combustion air adjustment damper 29. In this regard, the flow quantities of the primary combustion air ba-bc and the secondary combustion air bd can be adjusted by changing speed of rotation of the primary combustion air blower 26 and/or the secondary combustion air blower 28, or changing opening of the primary combustion air adjustment dampers 27a-27c or the secondary combustion air adjustment damper 29.

A combustion exhaust gas d, that has been generated as a result of combustion of the object-to-be-combusted a in the inside of the grate-fired incinerator 21, is discharged from an outlet of the grate-fired incinerator 21, and cooled through a waste heat boiler 30; thereafter, the exhaust gas is discharged from a stack 32 to the atmosphere, via an exhaust gas cleaning device 31, which comprises a chemical agent spraying facility, a bag filter, a De-NOx catalyst tower, and so on, so that toxic substances, fly ash, and so on are removed from the exhaust gas.

It should be reminded that part of the flow of the combustion exhaust gas d diverges in the inside of exhaust gas cleaning device 31 or a part downstream thereof, passes through an exhaust gas recirculation fan 33, and returns as a recirculated exhaust gas f to the incinerator 21. In this regard, the flow quantity of the returned recirculated exhaust gas f can be adjusted by changing speed of rotation of the exhaust gas recirculation fan 33 and/or changing opening of a recirculated exhaust gas quantity adjustment damper 34.

Further, in the waste heat boiler 30, steam g is generated as a result of heat exchange with the combustion exhaust gas d, and the steam is led to a steam turbine generator 35 to be used in an electric power generation process.

Further, furnace cooling water h for lowering the temperature in the inside of the incinerator and a De-NOx agent i used for nitrogen oxides (NOx) reduction reaction in the inside of the incinerator are supplied to the secondary combustion chamber of the incinerator 21. In general, urea water or ammonia water is used as the De-NOx agent i. In this regard, the flow quantities of the furnace cooling water h and the De-NOx agent i can be adjusted by changing opening of an furnace cooling water quantity adjustment valve 36 and opening of a De-NOx agent quantity adjustment valve 37, respectively.

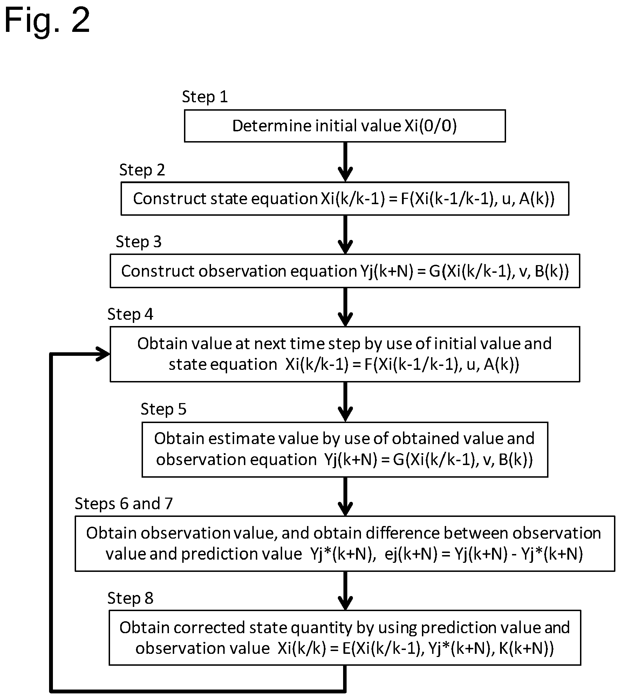

Further, the incineration plant 20 in the subject embodiment is provided with many measuring apparatuses such as a thermometer, a pressure gauge, a flowmeter, an exhaust gas analyzer, and so on, for the purpose of detecting whether the state of combustion of waste in the incinerator 21 is kept appropriately, and whether a desired quantity of steam is being obtained in the waste heat boiler 30. Among the many measuring apparatuses, a flame position detecting device 41, an incinerator-outlet exhaust gas thermometer 42, a boiler-outlet exhaust gas oxygen analyzer 43, a stack exhaust gas analyzer 44, and a steam flowmeter 45 are shown in Fig. 2 as those used especially for management of the state of combustion.

The flame position detecting device 41 is constructed and installed as a device for effectively detecting position of flame in the inside of the grate-fired incinerator 21, by applying a predetermined image process to obtained image information relating to the state in the inside of the incinerator 21.

The incinerator-outlet exhaust gas thermometer 42 is constructed and installed to be able to effectively measure temperature of the combustion exhaust gas d at an outlet of the grate-fired incinerator 21.

The boiler-outlet exhaust gas oxygen analyzer 43 is constructed and installed to be able to effectively measure oxygen concentration in the combustion exhaust gas d at an outlet of the waste heat boiler 30.

The stack exhaust gas analyzer 44 is constructed and installed to be able to effectively measure concentration of various gas components included in the combustion exhaust gas d in the stack 32, specifically, concentration of oxygen, carbon monoxide, nitrogen oxides, sulfur oxide, hydrogen chloride, mercury, and so on.

The steam flowmeter 45 is constructed and installed to be able to effectively measure the quantity of generated steam in the waste heat boiler 30.

Information obtained from the above measuring apparatuses is sent to a combustion control device 50, and, based on the information, control of operation of the incinerator 21 is performed.

In the combustion control device 50, for the purpose of controlling operation of the incinerator 21 in such a manner that management indexes, such as the flame position, the temperature of the exhaust gas at the incinerator outlet, the oxygen concentration of the exhaust gas at the boiler outlet, the concentration of the exhaust gas in the stack, the flow quantity of the steam, and so on that have been explained above, do not deviate from predetermined management range, a control logic which uses, as control quantities, the above management indexes themselves and/or physical quantities deeply relating to these management indexes is implemented. Specifically, oil quantities and/or oil pressure of the waste supplying device 24 and the waste feeding devices 25a-25c, speed of rotation of the primary combustion air blower 26, the secondary combustion air blower 28, and the exhaust gas recirculation fan 33, opening of the primary combustion air adjustment dampers 27a-27c, the secondary combustion air adjustment damper 29, the recirculated exhaust gas quantity adjustment damper 34, the furnace cooling water quantity adjustment valve 36, and the De-NOx agent quantity adjustment valve 37, that have been explained above, and so on are adjusted, by referring to measured values of the flame position, the temperature of the exhaust gas at the incinerator outlet, the oxygen concentration of the exhaust gas at the boiler outlet, the concentration of the exhaust gas in the stack, the flow quantity of the steam, and so on that have been explained above. As a result thereof, control of operation of the incinerator 21, wherein the state of combustion of waste in the incinerator 21 is kept in an appropriate state and a desired flow quantity of steam is obtained, is performed.

In addition to the above functions, the combustion control device 50 in the subject embodiment is constructed to be able to estimate, by use of a state space model(s), at least one of state quantities of the object-to-be-combusted a in the incinerator, that cannot be measured directly or are difficult to measure directly in general in the grate-fired incinerator 21, and perform control of combustion in the grate-fired incinerator 21 based on the one or more estimated state quantities, wherein tangible state quantities are the quantity of the object-to-be-combusted a supplied onto fire grates of the grate-fired incinerator 21, and the lower heating value, the higher heating value, the moisture content, the combustible content, the ash content, the carbon content, the hydrogen content, the nitrogen content, the sulfur content, the chlorine content, the mercury content, the waste type, and the waste-type composition ratio of the object-to-be-combusted a staying on the fire grates of the grate-fired incinerator 21.

Accordingly, for estimating the above state quantities that cannot be measured directly or are difficult to measure directly, the combustion control device 50 in the subject embodiment uses one or more observed quantities that are directly measured at observation points positioned in various places in the grate-fired incineration plant 20, and/or one or more calculated quantities that can be obtained by performing logical or empirical calculation using the one or more observed quantities. Specifically, for example, one or more measured values obtained from the above-explained various measuring devices, i.e., the temperature of the combustion exhaust gas d at the outlet of the grate-fired incinerator 21 measured by the incinerator-outlet exhaust gas thermometer 42, the oxygen concentration in the combustion exhaust gas d at the outlet of the waste heat boiler 30 measured by the boiler-outlet exhaust gas oxygen analyzer 43, the concentration of various gas components (oxygen, carbon monoxide, nitrogen oxides, sulfur oxide, hydrogen chloride, mercury, and so on) included in the combustion exhaust gas d in the stack 32 measured by the stack exhaust gas analyzer 44, and the quantity of generated steam in the waste heat boiler 30 measured by the steam flowmeter 45, may be used as an observed quantity (quantities) directly measured at the observation point(s) in the grate-fired incineration plant 20.

Further, for example, the grate-fired incineration plant 20 may be provided with a fed object-to-be-combusted weight measuring device 46 for measuring weight of an object-to-be-combusted a thrown into the waste hopper 23 by the waste crane 22, and the weight of the object-to-be-combusted a measured by the fed object-to-be-combusted weight measuring device 46 may be used as one of observed quantities for estimating a state quantity (quantities) in the grate-fired incinerator 21. Further, based on the weight of the object-to-be-combusted a measured by the fed object-to-be-combusted weight measuring device 46, and in accordance with a predetermined theoretical formula or empirical rule, calculated quantities such as the volume of the object-to-be-combusted a remaining in the waste hopper 23, the density of the object-to-be-combusted a, and the quantity of heat generated as a result of thermal decomposition and/or combustion reaction of the object-to-be-combusted a on the fire grates of the grate-fired incinerator 21, and so on, for example, may be obtained; and the obtained calculated quantities may be used, together with the above respective types of observed quantities, to estimate the state quantity (quantities) in the grate-fired incinerator 21.

Observed quantities and calculated quantities, that are used by the combustion control device 50 in the subject embodiment to estimate state quantity (quantities) that cannot be measured directly or are difficult to measure directly in the grate-fired incinerator 21, are not limited to those explained in the above description. The combustion control device 50 according to the subject embodiment can use, as an observed quantity and a calculated quantity, at least one of: weight, volume, density, and a supplied quantity of the object-to-be-combusted a; internal temperature, outlet temperature, internal pressure, a supplied air quantity, a supplied water quantity, a supplied chemical agent quantity, and a generated heat quantity of the incinerator 21; a flow quantity, flow speed, density, and temperature of the combustion exhaust gas d discharged from the incinerator 21; a carbon monoxide concentration, a carbon dioxide concentration, a nitrogen oxide concentration, a sulfur oxide concentration, a hydrogen chloride concentration, a moisture concentration, a mercury concentration, a dust concentration, an oxygen concentration, and a nitrogen concentration in the combustion exhaust gas d; a steam flow quantity, steam pressure, steam temperature, a suppled water flow quantity, and a held water quantity of the waste heat boiler 30 for cooling the combustion exhaust gas d; and a quantity of chemical agent supplied to the combustion exhaust gas d. For measuring the above observed quantities appropriately, the grate-fired incineration plant is provided with measuring apparatuses such as a thermometer, a pressure gauge, a flowmeter, an exhaust gas analyzer, and so on in the predetermined observation points in the plant, and the values of the observed quantities obtained by the respective measuring devices are sent to the combustion control device 50 to be used for estimating state quantity (quantities).

The combustion control device 50 is constructed to estimate the above one or more state quantities, that cannot be measured directly or are difficult to measure directly in the grate-fired incinerator 21, by use of a state space model(s), in which the one or more state quantities are set to be objective variables, and the one or more observed quantities that are measured directly in one or more observation points positioned in the grate-fired incineration plant 20 and/or the one or more calculated quantities that can be obtained by performing logical or empirical calculation using the one or more observed quantities are/is set to be explanatory variables (an explanatory variable).

Regarding a tangible construction, the combustion control device 50 comprises a computer which comprises at least a processor and a memory. The memory of the combustion control device 50 is constructed to store a program for executing respective steps of a state quantity estimating process that will be explained later, and a state equation(s) and an observation equation(s) that will be explained later. The processor in the combustion control device 50 is constructed to read the program from the memory, and perform, in accordance with the read program, the respective steps of the state quantity estimating process that will be explained later.

Fig. 2 is a flow chart of a state quantity estimating process for implementing a method for estimating a state quantity in a combustion facility, according to an embodiment of the present invention. In the following description, an embodiment, wherein a method of the present invention is applied to the above-explained grate-fired incineration plant 20 shown in Fig. 1, will be explained; however, the object to which the present invention can be applied is not limited to the grate-fired incineration plant 20. The technical idea of the present invention can be applied to a refuse incineration plant of a type other than the grate-fired type, a biomass combustion plant, or a combustion facility of any type for combusting other objects-to-be-combusted, for example.

First, in step 1, the processor in the combustion control device 50 determines an initial value $Xi(0/0)$ of a state quantity $Xi$ (i is a positive integer) that cannot be measured directly or are difficult to measure directly in a combustion facility (the grate-fired incineration plant 21). It is desirable that the initial value Xi(0/0) be set as close as possible to an actual value; however, since the state quantity Xi will be corrected to become a precise value by repeatedly performing the following respective steps, it may be possible to set the initial value to an appropriate value.

Next, in step 2, the processor in the combustion control device 50 determines a state equation

$$Xi(k/k\text{-}1) = F(Xi(k\text{-}1/k\text{-}1), u, A(k))$$

that represents relationship between a state quantity Xi(k-1/k-1) at a (k-1)-th time step and a state quantity Xi(k/k-1) at a k-th time step, and stores the determined state equation in the memory of the combustion control device 50. In this regard, F is a function for defining the state equation, u is white noise, and A(k) is a function determined in relation to a construction, a characteristic, an environmental condition, and so on of the combustion facility. The state quantity Xi(k/k-1) represents a state quantity Xi at the k-th time step, that is estimated by the state equation. For example, in the case that there is linear relationship between the state quantity Xi(k/k-1) and the state quantity Xi(k-1/k-1), the state equation can be described as follows:

$$Xi(k/k\text{-}1) = A_1(k)Xi(k\text{-}1/k\text{-}1) + A_2(k)u$$

Next, in step 3, the processor in the combustion control device 50 determines an observation equation

$$Yj(k+N) = G(Xi(k/k\text{-}1), v, B(k))$$

that represents relationship between the state quantity Xi(k/k-1) at the k-th time step and an observed quantity Yj(k+N) (j is an integer) at a (k+N)-th time step (N is an integer), and stores the determined observation equation in the memory of the combustion control device 50. In this regard, G is a function for defining a state equation, v is white noise that corresponds to observation noise generated during measurement of the observed quantity, and B(k) is a function determined in relation to a construction, a characteristic, an environmental condition, and so on of the combustion facility. The observed quantity Yj(k+N) represents a prediction value of the observed quantity Yj that is expected to be measured at a predetermined observation point in the combustion facility in step 6 that will be explained later. It should be reminded that Yj(k+N) may include a calculated quantity that can be obtained by performing logical or empirical calculation using an observed quantity, or may be replaced by such a calculated quantity. For example, in the case that there is linear relationship between the observed quantity Yj(k+N) and the state quantity Xi(k/k-1), the observation equation can be described as follows:

$$Yj(k+N) = B_1(k)Xi(k/k\text{-}1) + v$$

It is preferable that the value of N be set to a value representing a time lag corresponding to correlation between temporal change of the state quantity Xi and temporal change of the observed quantity Yj in the combustion facility. For example, the time lag N between the state quantity Xi and the observed quantity Yj may occur due to a factor relating to a process in the combustion facility, delay of measurement in a measuring device, and so on. It is possible to experimentally or theoretically acquire, in advance, such a time lag as a characteristic of a subject combustion facility. For example, regarding a combustion facility wherein, an hour after occurrence of specific temporal change of a state quantity Xi, temporal change of an observed quantity Yj correlating to the above specific temporal change appears, it is preferable that N be set to a value representing the time lag of one hour. Then, even in a combustion facility in which there is a time lag between behavior of a state quantity and behavior of an observed quantity, the state quantity can be estimated precisely.

Next, in step 4, the processor in the combustion control device 50 reads the state equation from the memory of the combustion control device 50, and applies the state quantity Xi(k-1/k-1) at a (k-1)-th time step to the state equation, for calculating the estimate value Xi(k/k-1) of the state quantity at the k-th time step. For example, an estimate value Xi(1/0) is obtained by applying an initial value Xi(0/0) of the state quantity (i.e., the state quantity at a 0th time step) to the state equation, an estimate value Xi(2/1) is obtained by applying a state quantity Xi(1/1) at a first time step to the state equation, an estimate value Xi(3/2) is obtained by applying a state quantity Xi(2/2) at a second time step to the state equation, and so on.

Next, in step 5, the processor in the combustion control device 50 reads the observation equation from the memory of the combustion control device 50, and applies the estimate value Xi(k/k-1) of the state quantity at the k-th time step, that is obtained in step 4, to the observation equation, for calculating the prediction value Yj(k+N) of the observed quantity (and/or the calculated quantity) at the (k+N)-th time step. For example, a prediction value Yj(1+N) of the observed quantity is obtained by applying an estimate value Xi(1/0) of the state quantity at a first time step to the observation equation, a prediction value Yj(2+N) of the observed quantity is obtained by applying an estimate value Xi(2/1) of the state quantity at a second time step to the observation equation, and so on.

Next, in step 6, the processor in the combustion control device 50 obtains, from a measuring device(s) positioned in one or more observation points in the combustion facility, an actual observation value(s) $Yj^*(k+N)$ of an observed quantity (quantities) measured directly at a (k+N)-th time step. Further, the processor in the combustion control device 50 may obtain, as necessary, the above calculated quantity by performing calculation experimentally or theoretically by using the obtained observation value $Yj^*(k+N)$. In the following description, the expression $Yj^*(k+N)$ may include a calculated quantity such as that explained above.

Next, in step 7, the processor in the combustion control device 50 calculates a difference $ej(k+N)$ between the prediction value $Yj(k+N)$ of the observed value obtained in step 5 and the actual observation value(s) $Yj^*(k+N)$ of the observed quantity obtained in step 6. For example, in an example wherein the value of N is set to N=0, a difference $ej(1)$ is obtained at a first time step, a difference $ej(2)$ is obtained at a second time step, and so on. Further, in the other example wherein the value of N is set to N≠0, a difference $ej(1+N)$ is obtained at the first time step, a difference $ej(2+N)$ is obtained at the second time step, and so on.

Next, in step 8, the processor in the combustion control device 50 corrects, based on the difference $ej(k+N)$ between the prediction value of the observed quantity and the actual observation value obtained in step 7, the estimate value $Xi(k/k-1)$ of the state quantity at the k-th time step obtained in step 4. More specifically, the processor in the combustion control device 50 calculates a corrected state quantity $Xi(k/k)$ in accordance with the following formula:

$$Xi(k/k) = E(Xi(k/k-1), Yj^*(k+N), K(k+N))$$

In this regard, K(k) is a function defined based on the predicted error (i.e., the difference obtained in step 7) $ej(k)$ of the observed quantity and the observation error v; more specifically, it can be represented, by using a variance-covariance matrix P(k) of the predicted error $ej(k)$ and variance Q(k) of the observation error v, as follows:

$$K(k) = P(k)B_1(k)^T(B_1(k)P(k)B_1(k)^T + Q(k))^{-1}$$

For example, function E can be described as follows:

$$Xi(k/k) = Xi(k/k-1)$$

$$+ K(k+N)(Yj^*(k+N) - B_1(k+N)Xi(k+N/k+N-1)$$

After step 8, the processor in the combustion control device 50 can determine, in order, state quantities at any time step by executing step 4 to step 8 repeatedly. In the case that an observed value $Yj^*(k+N)$ could not be obtained from a measuring device in above step 6, it will be regarded that $Xi(k/k)=Xi(k/k-1)$ for convenience, instead of executing steps 7 and 8 in relation to the subject time step, and the process is repeated from step 4 with respect to a next time step; so that, even if observation data has a defect, estimating of state quantities can be performed continuously.

According to the state quantity estimating method of the present embodiment, a state quantity is estimated by taking a time lag N between behavior of a state quantity Xi and behavior of a observed quantity Yi into consideration, so that the change in the state quantity Xi is not reflected immediately to the change in the observed quantity Yi; thus, a state quantity can be estimated precisely, even in a combustion facility in which a relatively large time lag in correlation between temporal change of a state quantity Xi and temporal change of an observed quantity Yj exists. In this regard, the time lag N may be a value that does not change, or a value that changes over time or in response to other conditions.

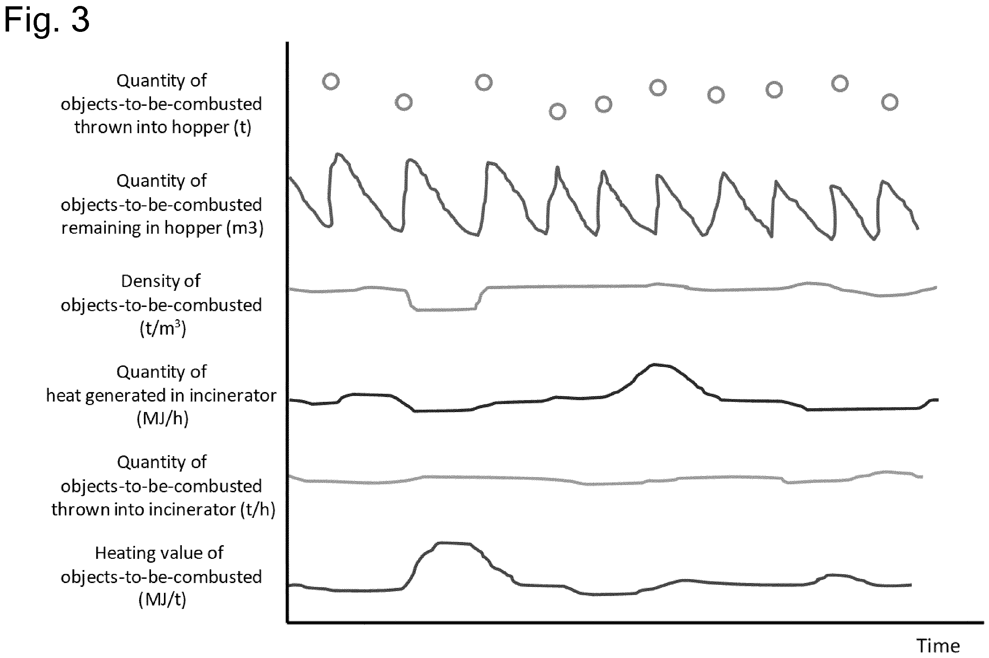

Fig. 3 shows an example of temporal change of each of some example state quantities, observed quantities, and calculated quantities in the grate-fired incineration plant 20 shown in Fig. 1. Fig. 3 shows, as an example of an observed quantity, the quantity of an object-to-be-combusted thrown into the hopper. The quantity of an object-to-be-combusted thrown into the hopper represents weight of an object-to-be-combusted a thrown into the waste hopper 23 by the waste crane 22, and is measured by the fed object-to-be-combusted weight measuring device 46 at predetermined time intervals. Fig. 3 also shows, as calculated quantities obtained by performing predetermined calculation based on observed quantities, the quantity of an object-to-be-combusted remaining in the hopper, the density of an object-to-be-combusted, and the quantity of heat generated in the incinerator. The quantity of an object-to-be-combusted remaining in the hopper represents the volume of an object-to-be-combusted a remaining in the waste hopper 23, and the quantity of heat generated in the incinerator represents the quantity of heat generated as a result of thermal decomposition and/or combustion reaction of an object-to-be-combusted a on the fire grates of the grate-fired incinerator 21. In the above quantities, the quantity of an object-to-be-combusted remaining in the hopper and the density of an object-to-be-combusted may be calculated in accordance with a predetermined theoretical formula or empirical rule, by using the above quantity of the object-to-be-combusted thrown into the hopper, that is an observed quantity measured by the fed object-to-be-combusted weight measuring device 46. Further, the quantity of heat generated in the incinerator may be calculated in accordance with a predetermined theoretical formula or empirical rule, by using the quantity of steam g generated in the waste heat boiler 30. Fig. 3 further shows the quantity of an object-to-be-combusted thrown into the incinerator and the heating value of an object-to-be-combusted. The quantity of an object-to-be-combusted thrown into the incinerator represents weight of an object-to-be-combusted a thrown, by the waste supplying device 24, into the grate-fired incinerator 21 per unit time from the waste hopper 23 which temporarily stores the object-to-be-combusted a; and the heating value of an object-to-be-combusted represents the quantity of heat generated per unit weight, that is expected to be generated when an object-to-be-combusted a is combusted. The quantity of an object-to-be-combusted thrown into the incinerator and the heating value of an object-to-be-combusted are state quantities that are estimated by performing the state quantity estimating method of the present embodiment, by using, as observed quantities or calculated quantities, the above quantity of an object-to-be-combusted thrown into the hopper, the quantity of an object-to-be-combusted remaining in the hopper, the density of an object-to-be-combusted, and the quantity of heat generated in the incinerator.

The combustion control device 50 performs combustion control of the grate-fired incinerator 21, based on a state quantity that has been estimated as explained above, for example, the quantity of an object-to-be-combusted thrown into the incinerator or the heating value of an object-to-be-combusted.

For example, the combustion control device 50 performs control for adjusting the quantity of the object-to-be-combusted a staying on the fire grates of the grate-fired incinerator 21 to be constant, by adjusting operating speed of the waste supplying device 24 or the waste feeding devices 25a-25c, based on an estimated quantity of the object-to-be-combusted thrown into the incinerator. More specifically, for example, in the case that there is a tendency for the quantity of the object-to-be-combusted thrown into the incinerator to decrease, the operating speed of the waste supplying device 24 is increased to perform adjustment to increase the quantity of the object-to-be-combusted a staying on the fire grates of the grate-fired incinerator 21. Alternatively, in the case that there is a tendency for the quantity of the object-to-be-combusted thrown into the incinerator to increase, the operating speed of the waste feeding devices 25a is decreased to perform adjustment to decrease the quantity of the object-to-be-combusted a staying on the fire grates of the grate-fired incinerator 21.

Further, for example, the combustion control device 50 performs control for adjusting the quantity of heat generated as a result of combustion of the object-to-be-combusted a in the grate-fired incinerator 21 to be constant, by adjusting operating speed of the waste supplying device 24 or the waste feeding devices 25a-25c, based on an estimated heating value of the object-to-be-combusted. More specifically, for example, in the case that there is a tendency for the heating value of the object-to-be-combusted to decrease, the operating speed of the waste supplying device 24 is increased to perform adjustment to increase the quantity of the object-to-be-combusted a staying on the fire grates of the grate-fired incinerator 21 to thereby increase the quantity of heat generated in the incinerator 21. Alternatively, in the case that there is a tendency for the heating value of the object-to-be-combusted to increase, the operating speed of the waste supplying device 24 is decreased to perform adjustment to decrease the quantity of the object-to-be-combusted a staying on the fire grates of the grate-fired incinerator 21 to thereby decrease the quantity of heat generated in the incinerator 21.

It should be reminded that the method for performing combustion control of the grate-fired incinerator 21 is not limited to that comprising adjustment of operating speed of the waste supplying device 24 or the waste feeding devices 25a-25c. For example, the combustion control device 50 may be constructed to adjust, based on an estimated state quantity, the opening of the primary combustion air adjustment dampers 27a-27c, the opening of the secondary combustion air adjustment damper 29, the quantity of flow of the furnace cooling water h supplied for adjusting temperature in the incinerator 21, the quantity of the reaction agent i supplied for NOx reduction reaction in the incinerator 21, and so on.

In the above embodiments, the combustion control device 50 is constructed to estimate the state quantity of the object-to-be-combusted a within the incinerator of the grate-fired incinerator 21; however, it is also possible to estimate, by use of methods similar to the above method, other state quantities, for example, a state quantity of a De-NOx catalyst in the exhaust gas cleaning device 31, and a state quantity in an incinerator of a fluidized-bed-type incinerator plant, which is a type of incineration plant different from the grate-fired combustion plant 20 shown in Fig. 1, specifically, the state quantity of an object-to-be-combusted staying within a fluidized bed or the state quantity corresponding to a fluidizing state of a bed material.

Embodiments of the present embodiment have been explained in the above description; however, the present invention is not limited by the above embodiments, and various modification are possible within the scope of the present invention as defined in the appended claims.

REFERENCE SIGNS LIST

20      Grate-fired combustion plant
21      Grate-fired incinerator
21a     Drying zone

| 21b | Combustion zone |
| 21c | Post-combustion zone |
| 22 | Waste crane |
| 23 | Waste hopper |
| 24 | Waste supplying device |
| 25a-25c | Waste feeding device |
| 26 | Primary combustion air blower |
| 27a-27c | Primary combustion air adjustment damper |
| 28 | Secondary combustion air blower |
| 29 | Secondary combustion air adjustment damper |
| 30 | Waste heat boiler |
| 31 | Exhaust gas cleaning device |
| 32 | Stack |
| 33 | Exhaust gas recirculation fan |
| 34 | Recirculated exhaust gas quantity adjustment damper |
| 35 | Steam turbine generator |
| 36 | Furnace cooling water quantity adjustment valve |
| 37 | De-NOx agent quantity adjustment valve |
| 41 | Flame position detecting device |
| 42 | Incinerator-outlet exhaust gas thermometer |
| 43 | Boiler-outlet exhaust gas oxygen analyzer |
| 44 | Stack exhaust gas analyzer |
| 45 | Steam flowmeter |
| 46 | Fed object-to-be-combusted weight measuring device |
| 50 | Combustion control device |
| a | Object-to-be-processed |
| ba-bc | Primary combustion air |
| bd | Secondary combustion air |
| c | Bottom ash |
| d | Combustion exhaust gas |
| f | Recirculated exhaust gas |
| g | Steam |
| h | Furnace cooling water |
| i | De-NOx agent |

**Claims**

1. A method for estimating, in a combustion facility in which an object-to-be-combusted is combusted, one or more state quantities that are difficult to measure directly, wherein the state quantity estimating method for the combustion facility comprises:

a state space model, in which the one or more state quantities are set to be objective variables, and one or more observed quantities that can be measured directly in one or more observation points positioned in the combustion facility and/or one or more calculated quantities that can be obtained by performing computation based on the one or more observed quantities are/is set to be explanatory variables, is used for estimating the objective variables; wherein estimating of the objective variable using the state space model is performed by a processor of a computer by executing:

a step for storing, in a memory of the computer, a state equation representing relationship between the state quantity at a (k-1)-th time step and the state quantity at a k-th time step;
a step for storing, in the memory, an observation equation representing relationship between the state quantity at the k-th time step and the observed quantity and/or the calculated quantity at the k-th time step;
a step for reading the state equation from the memory, and calculating an estimate value of the state quantity at the k-th time step by applying the state quantity at the (k-1)-th time step to the state equation;
a step for reading the observation equation from the memory, and calculating one or more prediction values of the observed quantity and/or the calculated quantity at the k-th time step by applying the estimate value of the state quantity at the k-th time step to the observation equation;
a step for obtaining an actual observation value of the observed quantity by using an measuring instrument in the observation point;
a step for calculating a difference between the prediction value of the observed quantity and the observation value; and
a step for correcting, based on the difference, the estimate value of the state quantity at the k-th time step.

2. The state quantity estimating method for the combustion facility recited in Claim 1, wherein:

the actually measured observation value of the observed quantity is a value measured at a (k+N)-th time step, and the difference is a difference between the prediction value at the (k+N)-th time step and the observation value.

3. The state quantity estimating method for the combustion facility recited in Claim 2, wherein: above N represents a time lag according to correlation between temporal change in the state quantity and temporal change in the observed quantity in the combustion facility.

4. The state quantity estimating method for the combustion facility recited in any one of Claims 1-3, wherein: the state quantity includes at least one of a state quantity of the object-to-be-combusted, a state quantity of a catalyst, and a state quantity corresponding to a fluidizing state of a bed material.

5. The state quantity estimating method for the combustion facility recited in Claim 4, wherein: the state quantity of the object-to-be-combusted includes at least one of a lower heating value, a higher heating value, a moisture content, a combustible content, an ash content, a carbon content, a hydrogen content, a nitrogen content, a sulfur content, a chlorine content, a mercury content, a waste type, and a waste-type composition ratio of the object-to-be-combusted.

6. The state quantity estimating method for the combustion facility recited in any one of Claims 1-5, wherein the observed quantity and the calculated quantity include at least one of: weight, volume, density, and a supplied quantity of the object-to-be-combusted; internal temperature, outlet temperature, internal pressure, a supplied air quantity, a supplied water quantity, a supplied chemical agent quantity, and a generated heat quantity of the combustion facility; a flow quantity, flow speed, density, and temperature of an exhaust gas discharged from the combustion facility; a carbon monoxide concentration, a carbon dioxide concentration, a nitrogen oxides concentration, a sulfur oxide concentration, a hydrogen chloride concentration, a moisture concentration, a mercury concentration, a dust concentration, an oxygen concentration, and a nitrogen concentration included in the exhaust gas; a steam flow quantity, steam pressure, steam temperature, a suppled water flow quantity, and a held water quantity of a boiler facility for cooling the exhaust gas; and a quantity of chemical agent supplied to the exhaust gas.

7. A method for controlling combustion in a combustion facility, wherein: control of combustion in the combustion facility is performed based on a state quantity or quantities estimated in accordance with the state quantity estimating method for the combustion facility recited in any one of Claims 1-6.

8. A combustion control device (50) for controlling combustion in a combustion facility in which an object-to-be-combusted is combusted, wherein:

the combustion control device (50) is constructed to use a state space model, in which one or more state quantities, that are difficult to measure directly in the combustion facility, are set to be objective variables, and one or more observed quantities that can be measured directly in one or more observation points positioned in the combustion facility and/or one or more calculated quantities that can be obtained by performing computation based on the one or more observed quantities are set to be explanatory variables, to estimate the state quantities, and perform combustion control of the combustion facility based on the estimated state quantities;
the combustion control device (50) comprises a processor and a memory;
the memory stores a state equation representing relationship between the state quantity at a (k-1)-th time step and the state quantity at a k-th time step, and an observation equation representing relationship between the state quantity at the k-th time step and the observed quantity and/or the calculated quantity at the k-th time step; and, for estimating the state quantity by use of the state space model, the processor is constructed to perform
a step for reading the state equation from the memory, and calculating an estimate value of the state quantity at the k-th time step by applying the state quantity at the (k-1)-th time step to the state equation,
a step for reading the observation equation from the memory, and calculating one or more prediction values of the observed quantity and/or the calculated quantity at the k-th time step by applying the estimate value of the state quantity at the k-th time step to the observation equation,
a step for obtaining an actual observation value of the observed quantity by using a measuring instrument in the observation point,
a step for calculating a difference between the prediction value of the observed quantity and the observation value, and
a step for correcting, based on the difference, the estimate value of the state quantity at the k-th time step.

**Patentansprüche**

1. Verfahren zum Schätzen, in einer Verbrennungsanlage, in der ein zu verbrennendes Objekt verbrannt wird, einer oder mehrerer Zustandsgrößen, die schwierig direkt zu messen sind, wobei das Zustandsgrößen-Schätzverfahren für die Verbrennungsanlage folgendes aufweist:

ein Zustandsraummodell, in dem die eine oder mehrere Zustandsgrößen als erklärte Variablen festgelegt werden und eine oder mehrere beobachtete Größen, die direkt an einem oder mehreren in der Verbrennungsanlage positionierten Beobachtungspunkten gemessen werden können, und/oder eine oder mehrere berechnete Größen, die durch Ausführen von Berechnungen auf der Grundlage der einen oder mehreren beobachteten Größen erhalten werden können, als erklärende Variablen verwendet werden, um die erklärte Variablen zu schätzen;
wobei die Schätzung der erklärten Variable unter Verwendung des Zustandsraummodells von einem Prozessor eines Computers durch Ausführen folgender Schritte durchgeführt wird:

einen Schritt zum Speichern einer Zustandsgleichung in einem Speicher des Rechners, die eine Beziehung zwischen der Zustandsgröße bei einem (k-1)-ten Zeitschritt und der Zustandsgröße bei einem k-ten Zeitschritt darstellt;
einen Schritt zum Speichern einer Beobachtungsgleichung im Speicher, die eine Beziehung zwischen der Zustandsgröße im k-ten Zeitschritt und der beobachteten Größe und/oder der berechneten Größe im k-ten Zeitschritt darstellt;
einen Schritt zum Lesen der Zustandsgleichung aus dem Speicher und Berechnen eines Schätzwertes der Zustandsgröße im k-ten Zeitschritt durch Anwenden der Zustandsgröße im (k-1)-ten Zeitschritt auf die Zustandsgleichung;
einen Schritt zum Lesen der Beobachtungsgleichung aus dem Speicher und zum Berechnen eines oder mehrerer Vorhersagewerte der beobachteten Größe und/oder der berechneten Größe beim k-ten Zeitschritt durch Anwenden des Schätzwertes der Zustandsgröße beim k-ten Zeitschritt auf die Beobachtungsgleichung;
einen Schritt zum Erlangen eines tatsächlichen Beobachtungswerts der beobachteten Größe unter Verwendung eines Messgeräts am Beobachtungspunkt;
einen Schritt zum Berechnen einer Differenz zwischen dem Vorhersagewert der beobachteten Größe und dem Beobachtungswert; und
einen Schritt zum Korrigieren des Schätzwerts der Zustandsgröße im k-ten Zeitschritt auf der Grundlage der Differenz.

2. Verfahren zur Schätzung der Zustandsgröße für die Verbrennungsanlage nach Anspruch 1, wobei:

der tatsächlich gemessene Beobachtungswert der beobachteten Größe ein in einem (k+N)-ten Zeitschritt gemessener Wert ist, und
die Differenz eine Differenz zwischen dem Vorhersagewert zum (k+N)-ten Zeitschritt und dem Beobachtungswert ist.

3. Verfahren zur Schätzung der Zustandsgröße für die Verbrennungsanlage nach Anspruch 2, wobei: N eine Zeitverzögerung gemäß der Korrelation zwischen der zeitlichen Änderung der Zustandsgröße und der zeitlichen Änderung der beobachteten Größe in der Verbrennungsanlage darstellt.

4. Verfahren zur Schätzung der Zustandsgröße für die Verbrennungsanlage nach einem der Ansprüche 1 bis 3, wobei: die Zustandsgröße mindestens eine Zustandsgröße des zu verbrennenden Objekts, eine Zustandsgröße eines Katalysators und/oder eine Zustandsgröße, die einem Fluidisierungszustand eines Bettmaterials entspricht, aufweist.

5. Verfahren zur Schätzung der Zustandsgröße für die Verbrennungsanlage nach Anspruch 4, wobei die Zustandsgröße des zu verbrennenden Objekts mindestens eines der folgenden enthält: einen unteren Heizwert, einen höheren Heizwert, einen Feuchtigkeitsgehalt, einen Gehalt an brennbarem Material, einen Aschegehalt, einen Kohlenstoffgehalt, einen Wasserstoffgehalt, einen Stickstoffgehalt, einen Schwefelgehalt, einen Chlorgehalt, einen Quecksilbergehalt, eine Abfallart und ein Abfallart-Zusammensetzungsverhältnis des zu verbrennenden Objekts.

**6.** Verfahren zur Schätzung der Zustandsgröße für die Verbrennungsanlage nach einem der Ansprüche 1 bis 5, wobei die beobachtete Größe und die berechnete Größe mindestens eines der folgenden enthält: Gewicht, Volumen, Dichte und eine zugeführte Menge des zu verbrennenden Objekts; Innentemperatur, Auslasstemperatur, Innendruck, eine zugeführte Luftmenge, eine zugeführte Wassermenge, eine zugeführte Menge eines chemischen Mittels und eine erzeugte Wärmemenge der Verbrennungsanlage; eine Strömungsmenge, Strömungsgeschwindigkeit, Dichte und Temperatur eines von der Verbrennungsanlage ausgegebenen Abgases; eine Kohlenmonoxid-Konzentration, eine Kohlendioxid-Konzentration, eine Stickoxid-Konzentration, eine Schwefeloxid-Konzentration, eine Chlorwasserstoff-Konzentration, eine Feuchtigkeitskonzentration, eine Quecksilber-Konzentration, eine Staub-Konzentration, eine Sauerstoff-Konzentration und eine Stickstoff-Konzentration, die in dem Abgas enthalten sind; eine Dampf-Durchflussmenge, ein Dampfdruck, eine Dampf-Temperatur, eine zugeführte Wasser-Durchflussmenge und eine zurückgehaltene Wasser-Menge einer Kesselanlage zum Kühlen des Abgases; und eine Menge eines dem Abgas zugeführten chemischen Mittels.

**7.** Verfahren zum Steuern der Verbrennung in einer Verbrennungsanlage, wobei das Steuern der Verbrennung in der Verbrennungsanlage auf der Grundlage einer Zustandsgröße oder Zustandsgrößen durchgeführt wird, die gemäß dem in einem der Ansprüche 1 bis 6 genannten Verfahren zur Schätzung der Zustandsgröße für die Verbrennungsanlage geschätzt wurden.

**8.** Verbrennungssteuervorrichtung (50) zum Steuern der Verbrennung in einer Verbrennungsanlage, in der ein zu verbrennendes Objekt verbrannt wird, wobei:

die Verbrennungssteuervorrichtung (50) konstruiert ist zum Verwenden eines Zustandsraummodells verwendet, in dem eine oder mehrere Zustandsgrößen, die in der Verbrennungsanlage nur schwer direkt gemessen werden können, als erklärte Variablen festgelegt werden, und eine oder mehrere beobachtete Größen, die direkt an einem oder mehreren in der Verbrennungsanlage positionierten Beobachtungspunkten gemessen werden können, und/oder eine oder mehrere berechnete Größen, die durch Ausführen einer Berechnung auf der Grundlage der einen oder mehreren beobachteten Größen erhalten werden können, als erklärende Variablen festgelegt werden, um die Zustandsgrößen zu schätzen, und zum Durchführen der Verbrennungssteuerung der Verbrennungsanlage auf der Grundlage der geschätzten Zustandsgrößen;
die Verbrennungssteuervorrichtung (50) einen Prozessor und einen Speicher aufweist;
der Speicher eine Zustandsgleichung speichert, die eine Beziehung zwischen der Zustandsgröße bei einem (k-1)-ten Zeitschritt und der Zustandsgröße bei einem k-ten Zeitschritt darstellt, und eine Beobachtungsgleichung, die eine Beziehung zwischen der Zustandsgröße bei dem k-ten Zeitschritt und der beobachteten Größe und/oder der berechneten Größe bei dem k-ten Zeitschritt darstellt; und,
zur Schätzung der Zustandsgröße unter Verwendung des Zustandsraummodells der Prozessor aufgebaut ist zum Durchführen:

eines Schritt zum Lesen der Zustandsgleichung aus dem Speicher und zum Berechnen eines Schätzwertes der Zustandsgröße im k-ten Zeitschritt durch Anwenden der Zustandsgröße im (k-1)-ten Zeitschritt auf die Zustandsgleichung,
eines Schritts zum Lesen der Beobachtungsgleichung aus dem Speicher und zum Berechnen eines oder mehrerer Vorhersagewerte der beobachteten Größe und/oder der berechneten Größe beim k-ten Zeitschritt durch Anwenden des Schätzwertes der Zustandsgröße beim k-ten Zeitschritt auf die Beobachtungsgleichung,
eines Schritts zum Erlangen eines tatsächlichen Beobachtungswerts der beobachteten Größe unter Verwendung eines Messgeräts am Beobachtungspunkt,
eines Schritts zum Berechnen einer Differenz zwischen dem Vorhersagewert der beobachteten Größe und dem Beobachtungswert, und
eines Schritts zum Korrigieren des Schätzwerts der Zustandsgröße im k-ten Zeitschritt auf der Grundlage der Differenz.

**Revendications**

1. Procédé d'estimation, dans une installation de combustion dans laquelle un objet à brûler est brûlé, d'une ou de plusieurs quantités d'état qui sont difficiles à mesurer directement, dans lequel le procédé d'estimation de quantité d'état pour l'installation de combustion comprend :

   un modèle d'espace d'état, dans lequel les une ou plusieurs quantités d'état sont définies comme étant des variables objectives, et une ou plusieurs quantités observées qui peuvent être mesurées directement dans un ou plusieurs points d'observation positionnés dans l'installation de combustion et/ou une ou plusieurs quantités calculées qui peuvent être obtenues en effectuant un calcul sur la base des une ou plusieurs quantités observées est/sont définies comme étant des variables explicatives, est utilisé pour estimer les variables objectives ;
   dans lequel l'estimation des variables objectives en utilisant le modèle d'espace d'état est effectué par un processeur d'un ordinateur en exécutant :

   une étape de stockage, dans une mémoire de l'ordinateur, d'une équation d'état qui représente la relation entre la quantité d'état à un (k-1)-ième pas de temps et la quantité d'état à un k-ième pas de temps ;
   une étape de stockage, dans la mémoire, d'une équation d'observation qui représente la relation entre la quantité d'état au k-ième pas de temps et la quantité observée et/ou la quantité calculée au k-ième pas de temps ;
   une étape de lecture de l'équation d'état à partir de la mémoire et de calcul d'une valeur estimée de la quantité d'état au k-ième pas de temps en appliquant la quantité d'état au (k-1)-ième pas de temps à l'équation d'état ;
   une étape de lecture de l'équation d'observation à partir de la mémoire, et de calcul des une ou plusieurs valeurs de prédiction de la quantité observée et/ou de la quantité calculée au k-ième pas de temps en appliquant la valeur estimée de la quantité d'état au k-ième pas de temps à l'équation d'observation ;
   une étape d'obtention d'une valeur d'observation réelle de la quantité observée en utilisant un instrument de mesure au point d'observation ;
   une étape de calcul d'une différence entre la valeur de prédiction de la quantité observée et la valeur d'observation ; et
   une étape de correction, en fonction de la différence, de la valeur estimée de la quantité d'état au k-ième pas de temps.

2. Procédé d'estimation d'une quantité d'état pour une installation de combustion selon la revendication 1, dans lequel :

   la valeur d'observation réellement mesurée de la quantité observée est une valeur mesurée à un (k+N)-ième pas de temps, et
   la différence est une différence entre la valeur de prédiction au (k+N)-ième pas de temps et la valeur d'observation.

3. Procédé d'estimation d'une quantité d'état pour une installation de combustion selon la revendication 2, dans lequel : N ci-dessus représente un décalage temporel selon la corrélation entre la variation dans le temps de la quantité d'état et la variation dans le temps de la quantité observée dans l'installation de combustion.

4. Procédé d'estimation d'une quantité d'état pour une installation de combustion selon l'une quelconque des revendications 1 à 3, dans lequel : la quantité d'état comporte au moins une parmi une quantité d'état de l'objet à brûler, une quantité d'état d'un catalyseur et une quantité d'état correspondant à un état de fluidisation d'un matériau de lit.

5. Procédé d'estimation d'une quantité d'état pour une installation de combustion selon la revendication 4, dans lequel : la quantité d'état de l'objet à brûler comporte au moins un parmi un pouvoir calorifique inférieur, un pouvoir calorifique supérieur, une teneur en humidité, une teneur en combustible, une teneur en cendres, une teneur en carbone, une teneur en hydrogène, une teneur en azote, une teneur en soufre, une teneur en chlore, une teneur en mercure, un type de déchet et un rapport de composition de type de déchet de l'objet à brûler.

6. Procédé d'estimation d'une quantité d'état pour une installation de combustion selon l'une quelconque des revendications 1 à 5, dans lequel la quantité observée et la quantité calculée comportent au moins un parmi : le poids, le volume, la masse volumique et une quantité fournie de l'objet à brûler ; la température interne, la température de sortie, la pression interne, une quantité d'air fournie, une quantité d'eau fournie, une quantité d'agent chimique fournie et une quantité de chaleur générée par l'installation de combustion ; un débit, une vitesse d'écoulement, une masse volumique et une température d'un gaz d'échappement évacué hors de l'installation de combustion ; une concentration en monoxyde de carbone, une concentration en dioxyde de carbone, une concentration en oxydes d'azote, une concentration en oxydes de soufre, une concentration en chlorure d'hydrogène, une concentration en humidité, une concentration en mercure, une concentration en poussières, une concentration en oxygène et une concentration en azote inclus dans le gaz d'échappement ; un débit de vapeur, une pression de vapeur, une température de vapeur, un débit d'eau fournie et une quantité d'eau retenue d'une installation de chaudière pour refroidir le gaz d'échappement ; et une quantité d'agent chimique fournie au gaz d'échappement.

7. Procédé de commande de la combustion dans une installation de combustion, dans lequel : la commande de la combustion dans l'installation de combustion est effectuée sur la base d'une quantité de quantités d'état estimées conformément au procédé d'estimation de quantité d'état pour l'installation de combustion selon l'une quelconque des revendications 1 à 6.

8. Dispositif de commande de combustion (50) de commande de la combustion dans une installation de combustion dans laquelle un objet à brûler est brûlé, dans lequel :

le dispositif de commande de combustion (50) est construit pour utiliser un modèle d'espace d'état, dans lequel une ou plusieurs quantités d'état, qui sont difficiles à mesurer directement dans l'installation de combustion, sont définies comme des variables objectives, et une ou plusieurs quantités observées qui peuvent être mesurées directement dans un ou plusieurs points d'observation positionnés dans l'installation de combustion et/ou une ou plusieurs quantités calculées qui peuvent être obtenues en effectuant un calcul sur la base des une ou plusieurs quantités observées sont définies comme des variables explicatives, pour estimer les quantités d'état, et effectuer une commande de la combustion de l'installation de combustion sur la base des quantités d'état estimées ;

le dispositif de commande de combustion (50) comprend un processeur et une mémoire ;

la mémoire stocke une équation d'état représentant la relation entre la quantité d'état à un (k-1)-ième pas de temps et la quantité d'état à un k-ième pas de temps, et une équation d'observation représentant la relation entre la quantité d'état au k-ième pas de temps et la quantité observée et/ou la quantité calculée au k-ième pas de temps ; et,

pour estimer la quantité d'état en utilisant le modèle d'espace d'état, le processeur est construit pour effectuer une étape de lecture de l'équation d'état à partir de la mémoire et de calcul d'une valeur estimée de la quantité d'état au k-ième pas de temps en appliquant la quantité d'état au (k-1)-ième pas de temps à l'équation d'état, une étape de lecture de l'équation d'observation à partir de la mémoire, et de calcul d'une ou de plusieurs valeurs de prédiction de la quantité observée et/ou de la quantité calculée au k-ième pas de temps en appliquant la valeur estimée de la quantité d'état au k-ième pas de temps à l'équation d'observation,

une étape d'obtention d'une valeur d'observation réelle de la quantité observée en utilisant un instrument de mesure au point d'observation,

une étape de calcul d'une différence entre la valeur de prédiction de la quantité observée et la valeur d'observation, et

une étape de correction, en fonction de la différence, de la valeur estimée de la quantité d'état au k-ième pas de temps.

Fig. 1

EP 3 816 515 B1

# Fig. 2

Step 1

> Determine initial value Xi(0/0)

Step 2

> Construct state equation Xi(k/k-1) = F(Xi(k-1/k-1), u, A(k))

Step 3

> Construct observation equation Yj(k+N) = G(Xi(k/k-1), v, B(k))

Step 4

> Obtain value at next time step by use of initial value and state equation  Xi(k/k-1) = F(Xi(k-1/k-1), u, A(k))

Step 5

> Obtain estimate value by use of obtained value and observation equation  Yj(k+N) = G(Xi(k/k-1), v, B(k))

Steps 6 and 7

> Obtain observation value, and obtain difference between observation value and prediction value  Yj*(k+N),  ej(k+N) = Yj(k+N) - Yj*(k+N)

Step 8

> Obtain corrected state quantity by using prediction value and observation value  Xi(k/k) = E(Xi(k/k-1), Yj*(k+N), K(k+N))

# Fig. 3

- Quantity of objects-to-be-combusted thrown into hopper (t)
- Quantity of objects-to-be-combusted remaining in hopper (m3)
- Density of objects-to-be-combusted ($t/m^3$)
- Quantity of heat generated in incinerator (MJ/h)
- Quantity of objects-to-be-combusted thrown into incinerator (t/h)
- Heating value of objects-to-be-combusted (MJ/t)

Time

EP 3 816 515 B1

**EP 3 816 515 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005103565 A2
- WO 2017085941 A1

- JP 2018021686 A